# EUROPÄISCHE PATENTANMELDUNG

(11) **EP 1 376 580 A2**
(43) Veröffentlichungstag der Anmeldung: **02.01.2004**
(21) Anmeldenummer: 03013233.6
(22) Anmeldetag: 12.06.2003
(51) Int. Cl.: G11B 23/40

(54) **Etikett zum Bekleben eines Datenträgers, insbesondere einer CD oder DVD**

(30) Priorität: 13.06.2002 DE 10226146
(71) Anmelder: Wäsch Etiketten GmbH, 30989 Gehrden (DE)
(72) Erfinder: Pralle, Wolfgang, 30989 Gehrden (DE)
(74) Vertreter: Leine, Sigurd, Dipl.-Ing.

(57) **Zusammenfassung**

Etikett zum Bekleben eines Datenträgers in einer Kassette, insbesondere einer CD oder DVD, mit einer Etikettenschicht (4), mit einer Haftschicht auf einer Seite der Etikettenschicht (4), mit einer abziehbaren Abdeckfolie (22) auf der Haftschicht und mit einer Anlagekante zur Anlage an einer Anschlagkante in der Kassette. Die Abdeckfolie (22) ist in wenigstens zwei unabhängig voneinander von der Haftschicht abziehbare, durch eine Trennlinie voneinander getrennte Bereiche (28, 30) aufgeteilt. Hierdurch ist es möglich, daß die Abdeckfolie (22) beim Zentriervorgang weiterhin die Haftschicht abdecken kann, so daß eine Berührung mit den Fingern und ein Ankleben im nicht zentrierten Zustand vermieden ist. Im zentrierten Zustand kann zunächst ein Bereich der Abdeckfolie (22) unter dem Etikett (8) weggezogen und das Etikett in diesem Bereich festgeklebt werden, so daß es fixiert ist. Danach kann der andere Bereich unter dem Etikett (8) weggezogen und dann das Etikett in diesem Bereich angeklebt werden.

## Beschreibung

Die Erfindung betrifft ein Etikett der im Oberbegriff des Anspruchs 1 genannten Art.

Durch US 5,715,934 ist ein Etikett der im Oberbegriff des Anspruchs 1 genannten Art bekannt, es besteht aus einer Etikettenschicht, auf deren einen Seite sich eine Haftschicht befindet, die mit einer abziehbaren Schutzfolie abgedeckt ist. In der Mitte des runden Etiketts befindet sich ein runder Ausschnitt, der nach Aufkleben des Etiketts auf eine CD die zentrale Zentrieröffnung mit Abstand umgibt. Das Etikett weist auf der einen Hälfte einen den Rand des Etiketts überragenden Überstand auf, bestehend sowohl aus der Etikettenschicht als auch aus der Haftschicht und der Schutzfolie, wobei die Etikettenschicht entlang dem runden Rand des Etiketts von diesem durch eine Stanzung getrennt ist. Die Kanten des Überstandes bilden Anlagekanten zur Anlage an entsprechende Anschlagkanten in einer Kassette.

Zur Anbringung eines solchen Etiketts wird zunächst die Schutzschicht im Bereich des runden Etiketts von diesem abgezogen und somit von dem überstehenden, der Zentrierung dienenden Teil getrennt. Danach wird der überstehende Teil mit seinen Anlagekanten in einer Kassette, in der vorher eine CD eingelegt worden ist, zur Anlage gebracht, wobei natürlich dafür zu sorgen ist, daß die Klebeschicht nicht vor dem Zentriervorgang an der CD anhaftet. Danach wird das Etikett auf der CD durch Druck zum Anhaften gebracht und der überstehende, der Zentrierung dienende Teil entfernt.

Ein Nachteil dieses bekannten Etiketts besteht darin, daß bereits vor der Zentrierung die Schutzfolie im Bereich des runden Etiketts abgezogen und so die Haftschicht freigelegt wird. Hierdurch besteht die Gefahr, daß die Haftschicht mit den Fingern in Berührung kommt, was ihre Haftfähigkeit mindert, oder vor dem Zentriervorgang mit der Oberfläche der CD und somit an dieser in nicht zentriertem Zustand anhaftet. Eine nachträgliche Zentrierung ist dann nicht mehr möglich.

Durch DE 296 13 123 U1 ist ein Etikett ähnlich der zuvor genannten Art bekannt, bei dem jedoch keine Anschlagkante vorhanden ist und das Zentrieren des Etiketts dadurch erfolgt, daß ein im Etikett vorgesehenes Loch unter Sichtkontrolle in bezug zu einem Zentrierloch einer CD zentriert wird. Das Etikett wird dann mit der Hand auf die CD gedrückt und so die Zentrierlage aufrechterhalten, wonach dann ein Teil der durch eine Trennlinie getrennten Abdeckfolie entfernt und in diesem Bereich das Etikett mit der Haftschicht auf die CD geklebt wird. Nach dieser Fixierung wird dann der andere Teil der getrennten Abdeckfolie entfernt und dort das Etikett aufgeklebt. Da keine Anschlagkante vorhanden ist, kann das Etikett bei den Manipulationen von Hand verrutschen. Dies um so mehr, als die Abdeckfolie naturgemäß eine glatte Oberfläche hat, die ein verrutschen begünstigt.

Durch WO 01/89821 A1 ist ein Etikett ähnlich der im Oberbegriff des Anspruchs 1 genannten Art bekannt, bei dem in der Abdeckschicht und nur in dieser durch eine rechtwinklige Trennlinie eine Ausrichtlasche gebildet ist. Auf der dieser Ausrichtlasche gegenüberliegenden Seite ist eine Grifflasche gebildet. Beim Herauslösen dieses Gebildes aus einem umgebenden Etikettenbogen mittels der Grifflasche wird das Etikett von der Abdeckschicht abgehoben, wobei die Klebeschicht des größten Teils des Etiketts freigelegt wird, jedoch die Ausrichtlasche an dem Etikett hängenbleibt. Danach kann mittels der Ausrichtlasche ein Ausrichten der Kante der Ausrichtlasche an einer entsprechenden Anlagekante einer Kassette erfolgen, wobei mittels der Grifflasche Sorge dafür getragen werden muß, daß nicht das Etikett mit seiner freiliegenden Klebeschicht mit der oberfläche einer CD in Kontakt kommt, ehe der Ausrichtvorgang mit Hilfe der Ausrichtlasche beendet ist. Nach dem Ausrichten erfolgt dann das Andrücken des mit seiner Klebeschicht freiliegenden Teils des Etiketts an der CD. Danach muß unter dem Etikett die Ausrichtlasche weggezogen werden, was deshalb schwierig ist, weil die ausrichtende Kante an der gegenüberliegenden Anlagekante anliegt und erst umständlich aus der von der Anlagekante der Kassette gebildeten Vertiefung angehoben werden muß. Schließlich muß dann zum Schluß die Grifflasche abgerissen werden.

Der Erfindung liegt die Aufgabe zugrunde, ein Etikett der im Oberbegriff des in Anspruch 1 genannten Art zu schaffen, bei dem das Aufbringen eines Etiketts auf einen Datenträger vereinfacht und die Gefahr einer Fehlausrichtung und Beeinträchtigung der Haftschicht vermieden ist.

Die der Erfindung zugrundeliegende Aufgabe wird durch die im Kennzeichen des Anspruchs 1 angegebene Lehre gelöst.

Der Grundgedanke dieser Lehre besteht darin, das Etikett so auszubilden, daß die Abdeckfolie sich noch während des Ausrichtens und Zentrierens an dem Etikett befindet und somit nicht die Gefahr besteht, daß die Haftschicht mit der Oberfläche des Datenträgers in Berührung kommt, ehe der Zentriervorgang abgeschlossen ist. Zu diesem Zwecke ist die Abdeckfolie erfindungsgemäß durch eine beispielsweise durch Stanzung hervorgerufene Trennlinie in voneinander getrennte Bereiche unterteilt. Dadurch ist es möglich, vorzugsweise den von der Anlagekante am weitesten entfernten Bereich nach dem Zentriervorgang abzuziehen, ohne die so frei werdende Haftschicht zu berühren. Nach Abziehen dieses Bereichs der Schutzfolie kann das Etikett mit dem freiliegenden Teil der Haftschicht beispielsweise durch Druck auf die Oberfläche des Datenträgers aufgeklebt werden. Auf diese Weise ist das Etikett im zentrierten Zustand fixiert. Das bedeutet, daß der restliche Teil der Abdeckfolie abziehbar ist, ohne daß die Gefahr einer Berührung mit den Fingern besteht. Danach kann dieser restliche freiliegende Teil der Haftschicht mit dem Datenträger in Kontakt gebracht und somit das Etikett durch Druck endgültig aufgeklebt werden.

Eine zweckmäßige Weiterbildung der Erfindung besteht darin, daß die Abdeckfolie über den Rand des Etiketts hinausragt. Das bedeutet, daß dieser überstehende Rand der Abdeckfolie einfacher mit den Fingern zu greifen und somit die Abdeckfolie des jeweiligen Bereichs leichter abzuziehen ist.

Eine zweckmäßige Weiterbildung dieser Ausführungsform besteht darin, daß die Anlagekante durch eine über das Etikett hinausragende Kante gebildet ist. Zweckmäßigerweise ist dabei die Anlagekante gerade, und sie endet in rechtem Winkel in Form von Ecken zur seitlichen Anlage an gegenüberliegenden Anschlagkanten in einer Kassette.

Gemäß einer zweckmäßigen Weiterbildung dieser Ausführungsform ist der äußere Rand des Etiketts rund, wie er zum Beispiel bei einer CD zweckmäßig ist, wobei die Anlagekante auf einer gedachten Linie liegt, die tangential zu dem äußeren Rand des Etiketts oder parallel zu dieser gedachten Linie verläuft. Durch passende Anordnung der Anlagekante ist eine Anpassung an eine entsprechende Anschlagkante in einer Kassette möglich.

Zweckmäßigerweise bildet die Anschlagkante ganz oder teilweise eine Kante eines rechtwinkligen Vierecks, dessen Ecken den äußeren runden Rand des Etiketts überragen.

Eine grundsätzlich andere Weiterbildung der Grundlehre der Erfindung besteht darin, daß die äußere Kante des Etiketts rund ist, wobei das Etikett ein zentrales Loch aufweist und die Abdeckfolie radial nach innen über den Rand des zentralen Loches des Etiketts hinausragt und so ein Zentrierloch zur Zentrierung auf einem zentralen Zapfen in der Kassette für den Datenträger, zum Beispiel CD, bildet. Dies bedeutet, daß die Zentrierung nicht mehr außerhalb des Randes des Etiketts erfolgt, sondern in einem zentralen Bereich, so daß keine Überstände über den äußeren Rand des Etiketts erforderlich sind.

Um das Etikett einfacher bedrucken zu können, beispielsweise in einem Laserdrucker, bildet gemäß einer Weiterbildung der Erfindung das Etikett Teil eines rechtwinkligen Etikettenbogens, dessen Etikettenschicht eine Kreisstanzung entsprechend dem äußeren Rand eines runden Etiketts aufweist und dessen Abdeckfolie eine den äußeren Rand des runden Etiketts im Abstand umgebende durchlaufende Stanzung sowie eine die Trennlinie zwischen den beiden getrennten abziehbaren Bereichen der Abdeckfolie bildende Stanzung aufweist. Bei dieser Ausführungsform kann die Abdeckfolie mit dem daran haftenden Etikett aus dem Etikettenbogen zusammen mit dem anhaftenden Etikett herausgetrennt werden, derart, daß die Schutzfolie gemäß den zuvor genannten Ausführungsformen der Erfindung den äußeren Rand des Etiketts mit Abstand umgibt, um so das Abziehen der getrennten Bereiche der Schutzfolie zu erleichtern.

Anhand der Zeichnung soll die Erfindung an einem Ausführungsbeispiel näher erläutert werden.
Fig. 1 zeigt eine Vorderseite eines erfindungsgemäßen Etikettenbogens,
Fig. 2 zeigt die Rückseite eines erfindungsgemäßen Etikettenbogen und
Fig. 3 zeigt ein erfindungsgemäßes Etikett in Zentrierlage in einer Kassette.

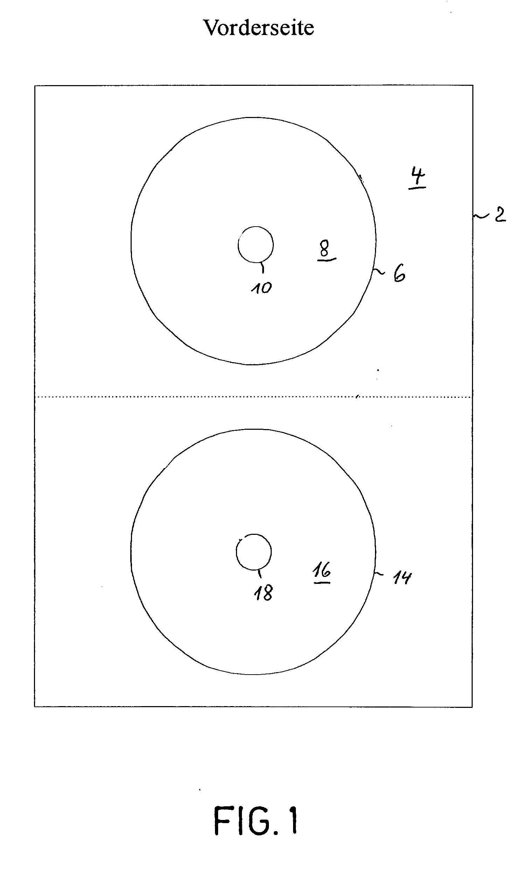

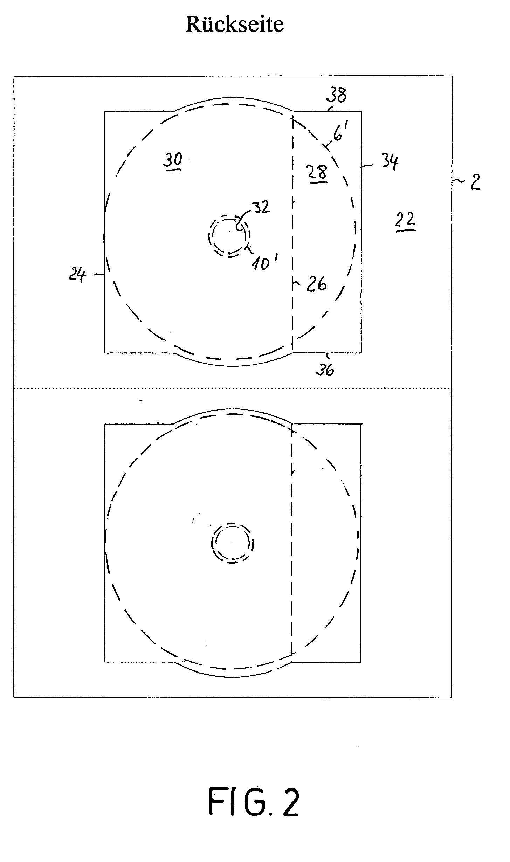

Fig. 1 zeigt die Vorderseite eines Etikettenbogens 2, der über seine gesamte Ausdehnung aus einer in Fig. 1 sichtbaren Etikettenschicht 4, einer darunter liegenden Haftschicht und einer darunter liegenden, nachfolgend anhand von Fig. 2 erläuterten Abdeckfolie besteht.

In der Etikettenschicht 4, und nur in dieser, befindet sich eine Kreisstanzung 6, die den Rand eines runden Etiketts 8 bildet, in dem sich ein zentrales Loch 10 befindet.

Der Etikettenbogen 2 ist durch eine Mikroperforation 12 in zwei Hälften unterteilt, so daß in einer unteren Hälfte in gleicher Weise wie in der oberen Hälfte durch eine Kreisstanzung 14 ein Etikett 16 gebildet ist, in dem sich ein zentrales Loch 18 befindet. Der Etikettenbogen 2 hat zweckmäßigerweise ein Format, das ein Bedrucken beispielsweise in einem Laserdrucker ermöglicht.

Fig. 2 zeigt die Rückseite des Etikettenbogens 2 mit einer Abdeckfolie 22, in der sich eine Stanzung 24 befindet, die zwei durch eine Stanzung 26 getrennte Bereiche 28 und 30 umschließt. Zur Verdeutlichung der Lage der Kreisstanzung 6 in Bezug zu der Stanzung 24 ist die Kreisstanzung 6, die auf der in Fig. 2 gezeigten Rückseite des Bogens 2 nicht sichtbar ist, durch eine gestrichelte Linie 6' angedeutet. Es ist erkennbar, daß im Zentrum der Kreisstanzung 6' im Bereich 30 eine runde Stanzung 32 vorgesehen ist, die nach Heraustrennen als Zentrierloch verwendbar ist. Ein durch eine gestrichelte Linie dargestelltes Loch 10' in der in Fig. 2 nicht sichtbaren Etikettenschicht hat einen etwas größeren Durchmesser als die Stanzung 32, so daß der Rand des zentralen Loches 10' gegenüber der Stanzung 32 zurückgesetzt und somit vermieden ist, daß Teile der nicht sichtbaren Haftschicht mit einem zentralen Zentrierzapfen einer Kassette für eine CD in Berührung kommt.

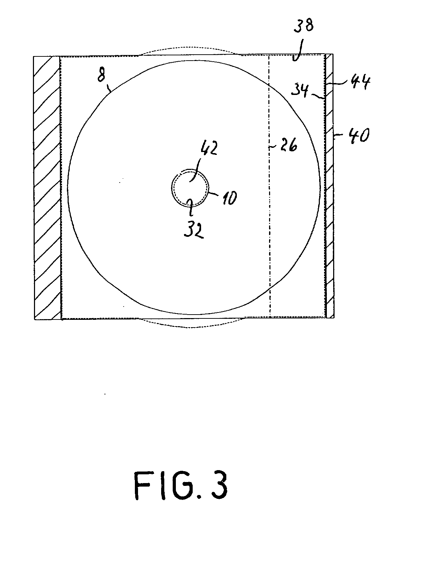

Bei der in Fig. 2 dargestellten Ausführungsform bildet die Stanzung 24 nach Heraustrennen des von ihr umschlossenen Teils des Etikettenbogens 2 eine Anlagekante 34 zur Anlage an einer entsprechenden Anschlagkante, wie das nachfolgend noch anhand von Fig. 3 erläutert wird, während Anlagekanten 36 und 38 zur Anlage an seitlichen Anschlagkanten dienen, um so eine Zentrierung in einer Kassette zu ermöglichen, wie das nachfolgend anhand von Fig. 3 erläutert wird.

Fig. 3 zeigt eine Kassette 40 mit einem zentralen Zentrierzapfen 42 für eine in die Kassette 40 eingelegte CD, die in dieser Darstellung nicht sichtbar ist, weil sie durch die Bereiche 28 und 30 des Etiketts abgedeckt ist. Die Anlagekante 34 liegt zum Zwecke der Zentrierung an einer Anschlagkante 44 der Kassette 40 an. Die Anlagekanten 36 und 38 liegen bei dieser Ausführungsform nicht an einer gegenüberliegenden Anschlagkante an, vielmehr erfolgt die Zentrierung parallel zu der Anlagekante 34 durch den Rand der Stanzung an dem Zentrierzapfen 42.

Die Anbringung eines Etiketts 8 gemäß der Erfindung erfolgt, indem zunächst die Abdeckfolie 22 im Bereich zwischen der Stanzung 24 zusammen mit dem anhaftenden Etikett 8 aus dem Etikettenbogen 2 herausgetrennt wird. Danach wird eine CD in die Kassette 40 eingelegt und die Anlagekante 34 an der Anschlagkante 44 zur Anlage gebracht und längs der Anschlagkante 44 so bewegt, daß der Zentrierzapfen 42 der Kassette 40 bündig und zentrierend in das durch die Stanzung 32 gebildete Zentrierloch eingreift. In diesem Zustand wird die Abdeckfolie im Bereich der Anlagekanten 36 und 38 fest auf die Kassette 40 gedrückt und ein Zipfel des Bereichs 30 der Abdeckfolie 22 im Bereich der Stanzung 26 ergriffen und so die Abdeckfolie unter dem Etikett 8 weggezogen, so daß die daran haftende Haftschicht mit der CD in Berührung kommt und so aufgeklebt und unverrückbar mit der CD verbunden werden kann. Danach wird ein Zipfel der Abdeckfolie des Bereichs 28 (Fig. 2) beispielsweise im Bereich der Anlagekante 36 ergriffen und unter dem Etikett 8 abgezogen, so daß dieses auch in diesem Bereich aufgeklebt werden kann. Damit ist der Zentrier- und Aufklebvorgang für das Etikett 8 beendet, ohne daß die Gefahr einer Berührung und Zentrierung besteht.

## Patentansprüche

1. Etikett zum Bekleben eines Datenträgers in einer Kassette, insbesondere einer CD oder DVD,
- mit einer Etikettenschicht (4),
- mit einer Haftschicht auf einer Seite der Etikettenschicht (4),
- mit einer abziehbaren Abdeckfolie (20) auf der Haftschicht und
- mit einer Anlagekante zur Anlage an einer Anschlagkante in der Kassette,
**dadurch gekennzeichnet, daß** die Abdeckfolie (20) wenigstens zwei unabhängig voneinander von der Haftschicht abziehbare, durch eine Trennlinie (26) voneinander getrennte Bereiche (28, 30) aufweist, wobei die Trennlinie (26) so weit entfernt von der Anschlagkante (34) angeordnet ist, daß bei anliegender Anschlagkante (34) und angehobenem, der Anschlagkante (34) abgewandte Bereich (30) dessen durch die Trennlinie (26) gebildete Kante ergriffen werden kann.

2. Etikett nach Anspruch 1, **dadurch gekennzeichnet, daß** die Abdeckfolie (20) über den Rand des Etiketts (8) hinausragt.

3. Etikett nach Anspruch 1, **dadurch gekennzeichnet, daß** die Anlagekante (34) über das Etikett (8) hinausragt.

4. Etikett nach Anspruch 3, **dadurch gekennzeichnet, daß** die Anlagekante (34) gerade ist und an ihren Enden im rechten Winkel in Anlagekanten (34, 36) zur seitlichen Anlage an gegenüberliegenden Anschlagkanten in einer Kassette (40) übergeht.

5. Etikett nach Anspruch 4, **dadurch gekennzeichnet, daß** der äußere Rand des Etiketts (8) rund ist und daß die Anlagekante (34) auf einer gedachten Linie liegt, die tangential zu dem äußeren Rand des Etiketts (8) oder parallel dazu verläuft.

6. Etikett nach Anspruch 4, **dadurch gekennzeichnet, daß** die Anlagekante (34) eine Kante eines rechtwinkligen Vierecks bildet, dessen Ecken den äußeren runden Rand des Etiketts (8) überragen.

7. Etikett nach Anspruch 1, **dadurch gekennzeichnet, daß** das Etikett (8) ein zentrales Loch (10) aufweist und daß die Abdeckfolie den Rand des zentralen Loches (10) des Etiketts (8) radial nach innen überragt und ein Zentrierloch zur Zentrierung auf einem zentralen Zentrierzapfen (42) in der Kassette (40) für den Datenträger bildet.
